Europäisches Patentamt

European Patent Office

Office européen des brevets

(11) Publication number: 0 255 280
A2

# EUROPEAN PATENT APPLICATION

(21) Application number: 87306422.4

(22) Date of filing: 20.07.87

(51) Int. Cl.⁴: G06F 15/64

(30) Priority: 24.07.86 GB 8618060
15.07.87 GB 8716706

(43) Date of publication of application:
03.02.88 Bulletin 88/05

(84) Designated Contracting States:
BE DE FR IT LU NL SE

(71) Applicant: GEC AVIONICS LIMITED
Airport Works
Rochester Kent ME1 2XX(GB)

(72) Inventor: Blackmore, Kevin Daryl
41A Wenham Drive
Westcliff-on-Sea Essex SS0 9BJ(GB)
Inventor: Walker, Adrian William
5 London Road
Crays Hill Billericay Essex CM11 2UR(GB)

(74) Representative: Tolfree, Roger Keith
GEC p.l.c. Central Patent Department
Chelmsford Office Marconi Research Centre
West Hanningfield Road
Great Baddow Chelmsford Essex CM2
8HN(GB)

(54) Data storage.

(57) In a typical frame store for a raster scanned image, image data is stored in a memory element row-wise, i.e. as the image is scanned the pixels in each row are stored sequentially in the RAM. The invention provides a novel method of storing such data wherein the data is stored column wise in a plurality of memory elements, i.e. as data from an image is scanned in rows the value of the pixels in certain columns are stored in each memory element such that after receipt of a complete field or frame each memory element contains the data of one or more columns of the image. By having a plurality of memory elements data may be read out simultaneously from each element and thus the data can be processed more quickly than with conventional systems.

Fig. 1.

## Data Storage

This invention relates to data storage, and in particular it relates to a method and apparatus for storing sequentially received image data, for example that from a scanned imaging system, in an efficient manner and one in which real time processing can be applied to the data.

In a typical raster scanned image it is often necessary to store the received image in a frame or field store memory, particularly where further processing is to be applied to the image or for example for comparing one image with a previously received image. Conventionally raster scanned image data is stored in a memory element such as a RAM row-wise, i.e., as the image is scanned the pixels in each row are stored sequentially in the RAM. The length of each row in the RAM is usually equal to the length of a horizontal scan of the raster. When the receiving of the first row is completed, the next row of the RAM begins to fill up and so on until the RAM is full, after which a second RAM may begin to store a subsequently received image and so on. Although an entire field may be stored within one RAM according to this method, real time processing of the image data is difficult and it is often difficult to select particular portions of the image for processing.

According to the present invention there is provided a system for storing sequentially received data in a memory, comprising; a plurality of memory elements each including a plurality of successive memory locations and means for storing successive portions of the data in successive locations of successive elements.

Preferably, the data is stored in the plurality of memory elements in a column wise fashion wherein as an image is scanned in rows the data values in certain columns are stored in each memory element, such that each memory element contains the data of one or more columns of the image.

In this way, data can be read out from the field or frame store memory elements much quicker than previously since it can be read out from each element simultaneously; whereas prior art systems require serial read out in fixed order from the single frame or field store RAM.

If there are for instance eight memory elements then the first received pixel may be placed in location one of memory element one, the second received pixel in location one of memory element two, the third pixel in the first location of memory element three up to the eighth pixel in the first memory location of memory element eight. The nineth pixel is then stored in the next available location in memory element one and so on. Alternatively, consecutive pairs or blocks of adjacent pixel values can be stored in successive memory elements.

Embodiments of the invention will now be described by way of example only with reference to the accompanying drawings in which:

Figure 1 shows apparatus according to one embodiment of the present invention: and

Figure 2 shows a memory map for the RAM arrangement shown in Figure 1.

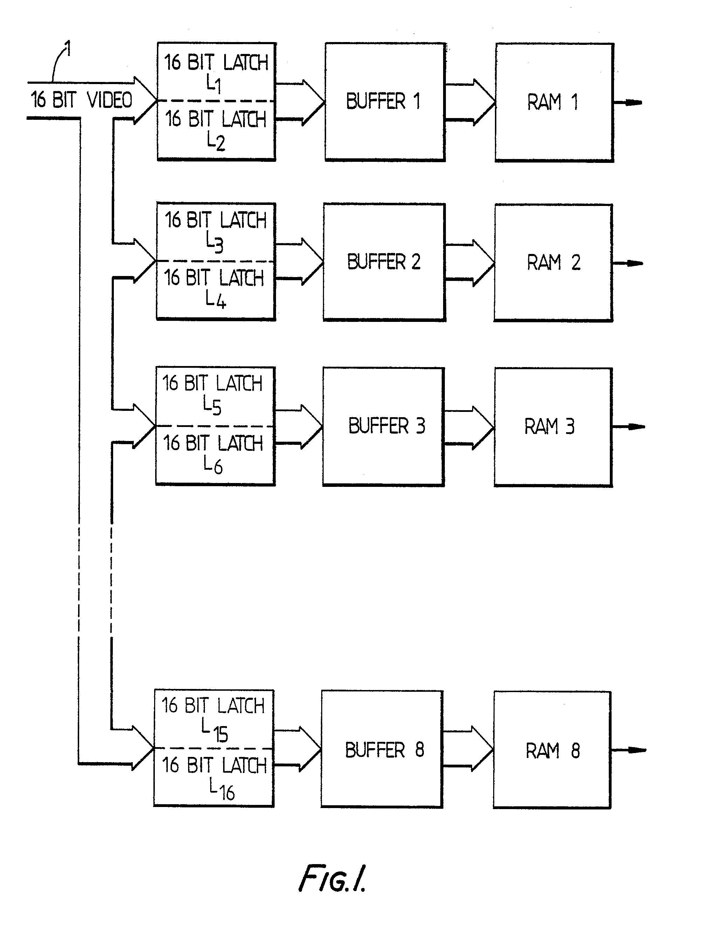

Refering to Figure 1 there is shown apparatus for use in a video processing system. The apparatus is shown, by way of example, for use with digital video data of sixteen bit resolution but of course the invention extends to apparatus for use with any type of digital signals and need not necessarily be concerned with actual image processing. The apparatus of Figure 1 comprises an imput channel 1 to which is continuously applied sequentially received fields of sixteen bit video data. Eight parallel channels are provided each consisting of two sixteen bit latches, e.g. L1 and L2 the output of which is fed to a respective buffer such as buffer 1 and from there to a respective 32 bit RAM (RAMS 1 to 8).

Incoming digitised video signals are fed sequentially by the system into the sixteen bit latches. In the receipt of a first field of an image the first pixel, pixel 1 is latched into latch 1, pixel 2 into latch 2, pixel 3 into latch 3 and so on up to pixel 16 into latch 16. After the last latch (latch16) has been written to then all sixteen pixels held in the latches are copied simultaneously to the row of 32 bit buffers, buffers 1 to 8. The resulting 32 bit numbers held within the buffers may then be transferred into the first available unoccupied memory locations in each of RAMs 1 to 8. While the RAMs are being loaded the next sixteen pixels are being latched in latches 1 to 16. This second set of 16 pixels is then copied to the buffers and the resulting 32 bit numbers copied to the next available locations within the RAMS. After one field has been received and stored in the RAM then the next received field, i.e. the even field if the first one was the odd field may then undergo exactly similar processing and again be used to simultaneously fill available spaces within the RAMs. The memory capacity of the RAMs in this embodiment is designed such that the RAMs are full after the receipt of a complete frame comprising an odd and even field; i.e. the entire array of RAMs 1 to 8 forms a frame store within which, at the end of each frame, each individual RAM contains one eighth of the pixel data within the frame.

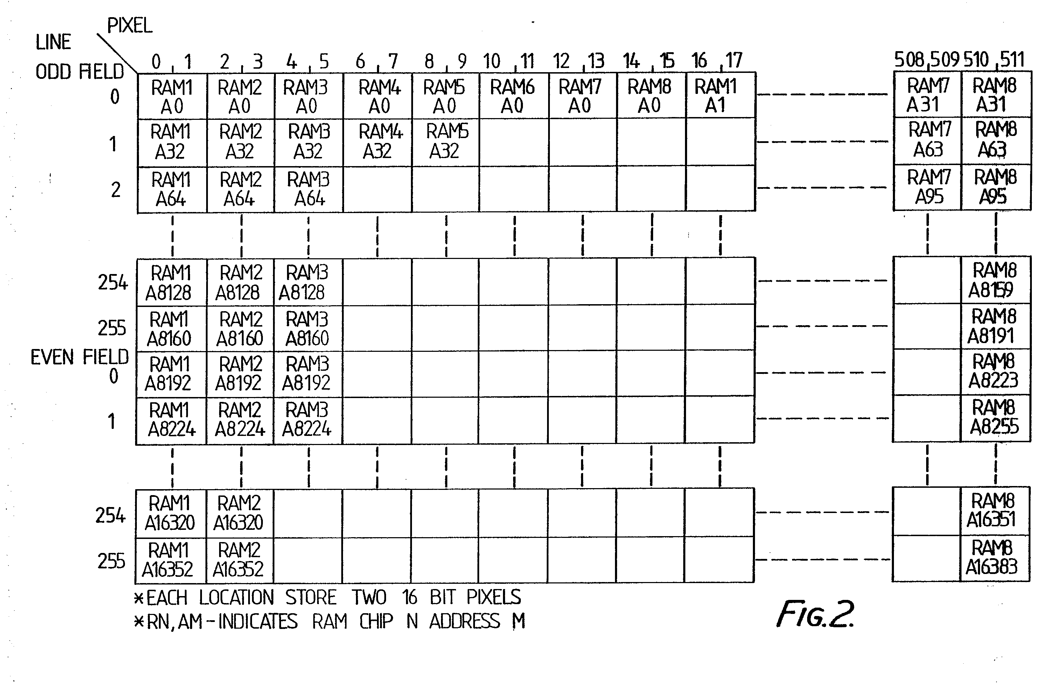

A memory map showing this more clearly is given in Figure 2. It it seen that after receipt of the first odd field, for instance, the first memory location in RAM 1 contains information about the first two pixels of the digital signal. Pixels 3 and 4 are stored in RAM 2, pixels 4 and 5 in RAM 3 etc. up to pixels 14 and 15 in RAM 8. Pixels 16 and 17 are then stored again in RAM 1 although of course in the next available location in RAM 1, which is shown as location A1 in the Figure.

The memory map shows how the RAMs would fill in a system of 512 bit resolution. The fields are interlaced in conventional manner so the vertical resolution of each field is 256 bits, although the interlacing effect creates a vertical resolution equal to that of a horizontal resolution of 512 bits. After the first line of the odd field has been received the first pixel of the second line' is stored in the next available RAM location, which is again in RAM 1 at position 32. This procedure is then repeated over the entire odd field. Receipt of the even field then follows and the first two pixels, pixels 0 and 1 of the even field are again stored in RAM 1, this time at location A8192. Pixels 2 and 3 are located at location A8192 of RAM 2 and so on. After receipt of the entire even field then the entire frame is stored within the RAM array RAMs 1 to 8.

The data may subsequently be read out of the RAMs in parallel form such that at any time 16 pixel values are being read out simultaneously.

## Claims

1. Data storage apparatus comprising; a plurality of memory elements (RAM2-8) each including a plurality of successive memory locations; and characterised by means for storing successive portions of the data in successive locations of successive elements.

2. Apparatus as claimed in claim 1 and adapted to store the data in the plurality of memory elements in a column wise fashion wherein as an image is scanned in rows the data values in certain columns are stored in each memory element, such that each memory element contains the data of one or more columns of the image.

3. Apparatus as claimed in claim 2 wherein each memory element is arranged to store the data in groups of two or more adjacent columns.

4. Apparatus as claimed in any of claims 1 to 3 wherein the data is representative of individual pixel values of a raster scanned image.

5. Apparatus as claimed in any of the preceding claims and including a plurality of latches (L1-L16) for latching individual pixel data, each latch being associated with a particular memory element; and means for applying this data to desired memory locations of the respective memory element.

6. Apparatus as claimed in claim 5 wherein two or more latches are associated with each memory element.

7. Apparatus as claimed in any of the preceding claims wherein the memory elements are RAMs.

8. Apparatus as claimed in any of the preceding claims wherein the plurality of memory elements comprises a field or frame store.

Fig.1.

PIXEL

| LINE | 0 , 1 | 2 , 3 | 4 , 5 | 6 , 7 | 8 , 9 | 10 , 11 | 12 , 13 | 14 , 15 | 16 , 17 | | 508 , 509 | 510 , 511 |
|---|---|---|---|---|---|---|---|---|---|---|---|---|
| ODD FIELD 0 | RAM1 A0 | RAM2 A0 | RAM3 A0 | RAM4 A0 | RAM5 A0 | RAM6 A0 | RAM7 A0 | RAM8 A0 | RAM1 A1 | --- | RAM7 A31 | RAM8 A31 |
| 1 | RAM1 A32 | RAM2 A32 | RAM3 A32 | RAM4 A32 | RAM5 A32 | | | | | --- | RAM7 A63 | RAM8 A63 |
| 2 | RAM1 A64 | RAM2 A64 | RAM3 A64 | | | | | | | --- | RAM7 A95 | RAM8 A95 |
| 254 | RAM1 A8128 | RAM2 A8128 | RAM3 A8128 | | | | | | | --- | | RAM8 A8159 |
| 255 | RAM1 A8160 | RAM2 A8160 | RAM3 A8160 | | | | | | | --- | | RAM8 A8191 |
| EVEN FIELD 0 | RAM1 A8192 | RAM2 A8192 | RAM3 A8192 | | | | | | | --- | | RAM8 A8223 |
| 1 | RAM1 A8224 | RAM2 A8224 | RAM3 A8224 | | | | | | | --- | | RAM8 A8255 |
| 254 | RAM1 A16320 | RAM2 A16320 | | | | | | | | --- | | RAM8 A16351 |
| 255 | RAM1 A16352 | RAM2 A16352 | | | | | | | | --- | | RAM8 A16383 |

* EACH LOCATION STORE TWO 16 BIT PIXELS
* RN, AM – INDICATES RAM CHIP N ADDRESS M

FIG.2.

0 255 280